# EUROPEAN PATENT SPECIFICATION

(11) **EP 2 618 453 B1**
(45) Date of publication and mention of the grant of the patent: **01.08.2018**
(21) Application number: 11824580.2
(22) Date of filing: 13.09.2011
(51) Int. Cl.: H02J 7/02, H02M 7/02, H02M 3/00, H02J 7/00

(54) **INTELLIGENT WALL-TYPE CHARGER**
INTELLIGENTES WANDMONTIERBARES LADEGERÄT
CHARGEUR MURAL INTELLIGENT

(30) Priority: 19.09.2010 CN 201020540373 U
(43) Date of publication of application: 24.07.2013
(73) Proprietor: Xu, Zhongfang, Wenling, Zhejiang 317503 (CN)
(72) Inventor: Xu, Zhongfang, Wenling, Zhejiang 317503 (CN)
(74) Representative: Dunlop, Hugh Christopher
(86) International application number: PCT/CN2011/079592
(87) International publication number: WO 2012/034510

(56) References cited:
- CN-A- 101 567 473
- CN-A- 101 951 007
- CN-U- 201 478 403
- CN-U- 201 490 901
- CN-Y- 200 990 513
- CN-Y- 201 360 167
- US-A1- 2008 012 423
- US-A1- 2008 012 423
- US-A1- 2008 258 677
- US-A1- 2009 315 509
- US-A1- 2010 102 772

## Description

### Technical Field

The invention relates to a charger for a notebook computer or other digital products and, in particular, to a wall-mounted charger.

### Background

Various digital products, such as MP3, MP4, digital cameras, cell phones, PSPs, toys, notebook computers, etc., become essential elements in people's daily life. Each of these digital products may be provided with a charger, a data transmission cable and the like. However, it may be inconvenient if separate chargers for a variety of digital products need to be used, especially while traveling.

An object of the invention is to provide a wall-mounted charger, which can automatically charge a notebook computer or digital products with USB ports, such as cell phones, digital cameras and the like, that are connected to the charger.

US2008/258677A1 describes a power supply for portable apparatuses that includes a plurality of power supplies and at least one charging station. Each power supply has a housing, a power input portion, and a plurality of power output portions. The power output portions can provide output voltage suitable for charging different portable apparatus.

US2010/102772A1 describes a power system that includes a housing with a base and a handle, a charge controller, and an inverter. The power system further includes a chimney-like venting system for cooling the power system. The chimney venting system may have at least one opening near said base and at least one opening near said handle.

US2008/012423A1 describes a USB adaptor device for use in pre-wiring of any office or home in order to have wall outlets and/or floor outlets available for charging of peripheral electronic devices. The USB adaptor device includes a USB power supply module having one or more USB connector ports each used for charging a peripheral electronic device.

### Summary of the Invention

In order to remedy defects of the existing chargers discussed above, the invention provides a
wall-mounted charger. Aspects of the invention are set out in the appended independent claim. In an example, a wall-mounted charger comprises a housing mountable on a wall, power supply control circuit inside the housing, and a display provided on the housing and electrically connected with the power supply control circuit. A charging port for a notebook computer and USB charging ports for digital products with USB ports may be provided on the housing; the power supply control circuit may be electrically connected with the charging port for the notebook computer and the USB charging ports, and can automatically and output selected charging voltages for notebook computers or other digital products charged through USB ports.

A charging indicator may be provided on the housing, which may be electrically connected with the power supply control circuit.

A switch for turning on/off the charger may additionally be provided on the housing, preferably on the right hand side of the charging port for notebook computers.

The charger may be provided with two USB charging ports and one charging port for notebook computers.

### Drawings

Figure 1 is a schematic diagram illustrating external structure of a charger according to a preferred embodiment of the invention.
Figure 2 is a flow chart illustrating operation of the power supply control circuit of a charger according to a preferred embodiment of the invention.

### Preferred Embodiments

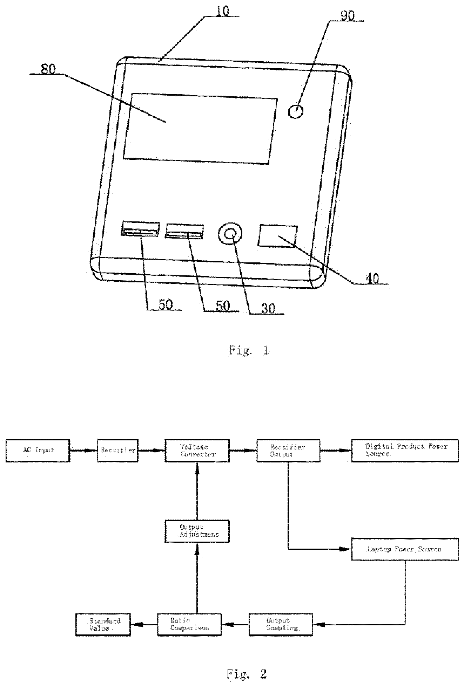

Figure 1 shows a preferred embodiment according to the invention. A wall-mounted charger comprises a housing 10 mountable on a wall, a power supply control circuit provided within the housing 10, and a display 80 provided on the housing 10 and electrically connected with the power supply control circuit. The wall-mounted charger is mountable on a wall in similar manners as used for conventional wall-mounted power sockets. A charging port 30 for notebook computers and USB charging ports 50 for other digital products, such as cell phones, are provided on the housing 10. The power supply control circuit is electrically connected with the charging port 30 for notebook computers and the USB charging ports 50 and can automatically output selected charging voltages for notebook computers, cell phones, or other digital products connected to the charger. The wall-mounted charger can therefore automatically charge notebook computers, cell phones, or other digital products connected thereto.

The aforementioned digital products include any digital products other than notebook computers.

The charger may be provided with two USB charging ports 50 and one charging port for notebook computers.

A charging indicator 90 may additionally be provided on the housing 10 and electrically connected with the power supply control circuit. A switch 40 may further be provided on the housing 10 for turning on/off the charger. The switch may be provided on the right hand side of the charging port 30 for notebook computers.

As shown in Figure 2, the invention functions in the following manner. An AC input terminal receives alternating current input which is generally 100-240V. The input alternating current may be subject to a filtering process at the AC input terminal and then converted into high-voltage DC input through a rectifier terminal. The high-voltage DC passes through a voltage converting device and a terminal of rectified output and is converted into a low-voltage DC output. The output voltage can be directly used as a charging voltage for cell phones, digital cameras, MP3 and other 3.7-5V digital products. The voltage output from the terminal of rectified output is set as a charging voltage for cell phones, digital cameras, MP3s and other 3.7-5V low-voltage digital products by default. When a notebook computer is connected to the charger, the voltage output from the terminal of rectified output is converted to a charging voltage for the notebook computer through another DC-DC converter. A user needs to connect a charge cable of the notebook computer to the charging port 30 for notebook computers to commence charging of the notebook computer. Subsequently, power supply for the notebook computer outputs a sample voltage, which is transmitted to a comparator terminal through an output sampling terminal. At the comparator terminal, the sample voltage is compared with a standard voltage set by a standard value terminal of the system. Based on result of the comparison, an adjusting signal is output from an output adjusting terminal and transmitted to the voltage converting device. The voltage converting device then systematically adjusts the output voltage based on the result of comparison and output an adjusted voltage to the notebook computer so as to charge the notebook computer at a suitable supply voltage.

### Advantages

A wall-mounted charger according to the invention may have a wall-mounted housing, which may be provided with a charging interface for charging a notebook computer and USB charging interfaces adapted for other digital products. A supply control circuit may automatically output charging voltages for notebook computers or other digital products chargeable through USB ports and directly charging the notebook computers or the other digital products. Furthermore, said charger has stable performance and can be mounted on a wall or other objects, and is particularly convenient for travelers. The charger reliably provides optimal charging voltages for notebook computers and various digital products chargeable through USB charging interfaces. The wall-mounted charger according to the invention can be installed in guest houses, hotels and public premises such as trains, vessels, cinemas, etc. and offers travelers or users great convenience. Moreover, it will greatly reduce burden of security checks at airport, stadium, conference hall, etc. Chargers of the invention can replace existing one-for-one chargers of conventional digital appliances and plan an important role in energy saving. Additionally, application of chargers of the invention can reduce waste of resources during manufacturing of digital products, as digital product manufacturers only need to provide a USB cable for each product.

### Industrial Applications

The wall-mounted charger of the invention can advantageously automatically charge notebook computers or digital products, such as cell phones and digital cameras and offer convenience in direct charge of notebook computers and various digital appliances.

## Claims

1. A wall-mountable charger, comprising a housing (10) mountable on a wall, a power supply control circuit provided in the housing (10), and a display (80) provided on the housing (10) and electrically connected with the power supply control circuit, wherein:
the wall-mountable charger is mountable on a wall;
a charging interface (30) for notebook computers and USB charging interfaces (50) for digital products chargeable through USB ports are provided on the housing (10); and
the power supply control circuit is electrically connected with the charging interface (30) for notebook computers and the USB charging interfaces (50) via a voltage converter which is adapted to output a first voltage level for the USB charging interfaces by default,
**characterized in that**:
the wall-mountable charger further comprises a voltage comparator which is operable, in response to a notebook computer being connected to the charging interface (30) for notebook computers, to sample an output voltage for the notebook computer, to generate an voltage adjustment signal based on a comparison between the sampled output voltage and a predetermined reference voltage, and to transmit the voltage adjustment signal to the voltage converter, wherein the voltage converter is operable to adjust the output voltage to a second voltage level suitable for notebook computers based on the voltage adjustment signal.

2. The wall-mountable charger of claim 1, wherein the housing (10) is provided with a charging indicator (90), which is electrically connected with the power supply control circuit.

3. The wall-mountable charger of claim 2, wherein the housing (10) is provided with a switch (40) for turning on/off the charger, wherein the switch (40) is provided on the right hand side of the charging interface (30) for notebook computers.

4. The wall-mountable charger of claim 3, comprising two said USB charging interfaces (50).

5. The wall-mountable charger of claim 1, comprising one said charging interface (30) for notebook computers.

## Patentansprüche

1. Ladegerät zur Wandmontage, umfassend ein Gehäuse (10), das an einer Wand montierbar ist, eine Energieversorgungs-Steuerschaltung, die in dem Gehäuse (10) bereitgestellt ist, und eine Anzeige (80), die an dem Gehäuse (10) bereitgestellt ist und elektrisch mit der Energieversorgungs-Steuerschaltung verbunden ist, wobei:
das Ladegerät zur Wandmontage an einer Wand montierbar ist,
eine Ladeschnittstelle (30) für Notebooks und USB-Ladeschnittstellen (50) für digitale Produkte, die über USB-Anschlüsse aufladbar sind, an dem Gehäuse (10) bereitgestellt sind und
die Energieversorgungs-Steuerschaltung elektrisch mit der Ladeschnittstelle (30) für Notebooks und den USB-Ladeschnittstellen (50) verbunden ist, über einen Spannungswandler, der dafür eingerichtet ist, standardmäßig eine erste Spannungshöhe für die USB-Ladeschnittstellen auszugeben,
**dadurch gekennzeichnet, dass**:
das montierbare Ladegerät zur Wandmontage ferner einen Spannungskomparator umfasst, der dazu dient, in Reaktion darauf, dass ein Notebook mit der Ladeschnittstelle (30) für Notebooks verbunden wird, eine Ausgangsspannung für das Notebook abzutasten, basierend auf einem Vergleich zwischen der abgetasteten Ausgangsspannung und einer festgelegten Referenzspannung ein Spannungsanpassungssignal zu erzeugen und das Spannungsanpassungssignal an den Spannungswandler zu senden, wobei der Spannungswandler dazu dient, basierend auf dem Spannungsanpassungssignal die Ausgangsspannung auf eine zweite Spannungshöhe anzupassen, die für Notebooks geeignet ist.

2. Ladegerät zur Wandmontage nach Anspruch 1, wobei das Gehäuse (10) mit einer Ladeanzeige (90) bereitgestellt ist, die elektrisch mit der Energieversorgungs-Steuerschaltung verbunden ist.

3. Ladegerät zur Wandmontage nach Anspruch 2, wobei das Gehäuse (10) mit einem Schalter (40) zum An-/Ausschalten des Ladegeräts bereitgestellt ist, wobei der Schalter (40) auf der rechten Seite der Ladeschnittstelle (30) für Notebooks bereitgestellt ist.

4. Ladegerät zur Wandmontage nach Anspruch 3, umfassend zwei der USB-Ladeschnittstellen (50).

5. Ladegerät zur Wandmontage nach Anspruch 1, umfassend eine der Ladeschnittstellen (30) für Notebooks.

## Revendications

1. Chargeur capable de montage mural, comprenant un boîtier (10) capable d'être monté sur un mur, un circuit de commande d'alimentation électrique dans le boîtier (10), et un affichage (80) fourni sur le boîtier (10) et connecté électriquement avec le circuit de commande d'alimentation électrique, dans lequel :
le chargeur capable de montage mural est capable d'être monté sur un mur ;
une interface de charge (30) pour des ordinateurs bloc-notes et des interfaces de charge USB (50) pour des produits numériques capables d'être chargés par le biais de ports USB sont fournies sur le boîtier (10) ; et
le circuit de commande d'alimentation électrique est connecté électriquement avec l'interface de charge (30) pour des ordinateurs bloc-notes et les interfaces de charge USB (50) par un convertisseur de tension qui est conçu pour sortir un premier niveau de tension pour les interfaces de charge USB par défaut,
**caractérisé en ce que** :
le chargeur capable de montage mural comprend en outre un comparateur de tension qui peut être amené à fonctionner, en réponse à un ordinateur bloc-notes étant connecté à l'interface de charge (30) pour des ordinateurs bloc-notes, pour échantillonner une tension de sortie pour l'ordinateur bloc-notes, pour générer un signal d'ajustement de tension sur la base d'une comparaison entre la tension de sortie échantillonnée et une tension de référence prédéterminée, et pour transmettre le signal d'ajustement de tension vers le convertisseur de tension, dans lequel le convertisseur de tension peut être amené à fonctionner pour ajuster la tension de sortie vers un deuxième niveau de tension adapté aux ordinateurs bloc-notes sur la base du signal d'ajustement de tension.

2. Chargeur capable de montage mural selon la revendication 1, dans lequel le boîtier (10) est pourvu d'un indicateur de charge (90), qui est connecté électriquement avec le circuit de commande d'alimentation électrique.

3. Chargeur capable de montage mural selon la revendication 2, dans lequel le boîtier (10) est équipé d'un commutateur (40) pour allumer/éteindre le chargeur, dans lequel le commutateur (40) est pourvu sur le côté droit de l'interface de charge (30) pour des ordinateurs bloc-notes.

4. Chargeur capable de montage mural selon la revendication 3, comprenant deux dites interfaces de charge USB (50).

5. Chargeur capable de montage mural selon la revendication 1, comprenant une dite interface de charge (30) pour des ordinateurs bloc-notes.
